# EUROPÄISCHE PATENTSCHRIFT

(11) **EP 4 143 002 B1**
(45) Veröffentlichungstag und Bekanntmachung des Hinweises auf die Patenterteilung: **16.10.2024**
(21) Anmeldenummer: 21737614.4
(22) Anmeldetag: 28.06.2021
(51) Int. Cl.: B29C 49/04, B29C 49/22, B29L 31/00, B29C 49/48, B29C 49/56

(54) **VORRICHTUNG UND VERFAHREN ZUM HERSTELLEN VON KUNSTSTOFFBEHÄLTNISSEN**
DEVICE AND METHOD FOR PRODUCING PLASTIC CONTAINERS
DISPOSITIF ET PROCÉDÉ DE PRODUCTION DE RÉCIPIENTS EN PLASTIQUE

(30) Priorität: 28.07.2020 DE 102020004564
(43) Veröffentlichungstag der Anmeldung: 08.03.2023
(73) Patentinhaber: kocher-plastik Maschinenbau GmbH, 74429 Sulzbach-Laufen (DE)
(72) Erfinder: SCHNELL, Michael, 73457 Essingen (DE)
(74) Vertreter: Bartels und Partner, Patentanwälte
(86) Internationale Anmeldenummer: PCT/EP2021/067718
(87) Internationale Veröffentlichungsnummer: WO 2022/022925

(56) Entgegenhaltungen:
- EP-B1- 2 310 181
- EP-B1- 2 639 042
- DE-A1- 2 052 460
- DE-U1- 20 307 904
- US-A- 3 614 807
- US-A- 6 145 285
- US-A1- 2006 231 986

## Beschreibung

Die Erfindung betrifft eine Vorrichtung zum Herstellen von Kunststoffbehältnissen mittels eines Form-, Füll- und Schließverfahrens, mit den Merkmalen im Oberbegriff von Anspruch 1. Die Erfindung betrifft ferner ein Verfahren zum Herstellen eines Kunststoffbehältnisses mit einer solchen Vorrichtung.

Die EP 2 909 000 B1 offenbart eine Vorrichtung zum kontinuierlichen Herstellen von Behältererzeugnissen aus Kunststoffmaterialien mittels Durchführen eines Form-, Füll- und Schließverfahrens. Die Vorrichtung weist eine Formeinrichtung auf, der mittels einer stationären Extrudiereinrichtung ein Formschlauch plastifizierten Kunststoffmaterials zuführbar ist. Die Formeinrichtung weist bewegbare Formflächen auf, die eine vorgebbare Behältergeometrie nachempfinden und an die der Formschlauch für einen Formgebungs-, Füll- und Schließvorgang anlegbar ist.

Die formflächenbildenden Backen der Formeinrichtung sind mittels einer Schließeinheit mit zur vertikalen Bewegungsrichtung des Formschlauches senkrecht verlaufender Bewegungsrichtung zwischen einer Form-Schließstellung und einer die Form öffnenden Abgabestellung bewegbar. Mittels einer Verschiebeeinheit ist die Schließeinheit aus einer Startposition heraus während des Formgebungs-, Füll- und Schließvorganges zusammen mit der Bewegung des Formschlauches vertikal nach unten und nach Beendigung dieses Vorganges wieder in die Startposition entgegengesetzt nach oben bewegbar.

Die EP 2 310 181 B1 beschreibt eine Vorrichtung zum Herstellen von Kunststoffbehältnissen mittels eines Form- und Schließverfahrens, mit den Merkmalen im Oberbegriff von Anspruch 1 zumindest bestehend aus einer Formeinrichtung mit einzelnen Formwerkzeugen, die wiederholt von einer geöffneten Aufnahmestellung in eine formgebende Schließstellung zueinander bewegbar sind, und aus einer Extrusionseinheit, mittels der mindestens ein extrudierter Kunststoffschlauch in die geöffnete Aufnahmestellung der Formwerkzeuge einbringbar ist, wobei die Extrusionseinheit mittels einer Verfahreinrichtung gegenüber der in jeder Stellung der Formwerkzeuge ortsfest angeordneten Formeinrichtung mit jedem extrudierten Kunststoffschlauch gegenläufig bewegbar ist, wobei die Formwerkzeuge der Formeinrichtung in gegenläufigen Richtungen horizontal mittels einer weiteren Verfahreinrichtung zueinander bewegbar sind, wobei die Extrusionseinheit mittels der einen Verfahreinrichtung quer dazu vertikal in gegenläufige Richtungen derart bewegbar ist, dass ein Teil des Kunststoffschlauches von einer obersten Extrusionsposition mittels der abgesenkten Extrusionseinheit in eine unterste Formgebungsposition bewegbar ist, und wobei die Formwerkzeuge der Formeinrichtung paarweise in Gruppen unterteilt, als Hauptform einmal der Formgebung eines Behälterkörpers des jeweiligen Behältnisses und einmal als Kopfform der Formgebung eines zugehörigen Kopfteiles dienen.

Weitere Vorrichtungen zum Herstellen von Kunststoffbehältnissen gehen aus der US 2006/0231986 A1, der US 6 145 285, der DE 203 07 904 U1 und der DE 20 52 460 A1 hervor.

Der Erfindung liegt die Aufgabe zugrunde, die bekannte Vorrichtung zum Herstellen von Kunststoffbehältnissen hinsichtlich ihrer Effizienz zu verbessern. Zudem ist ein verbessertes Verfahren zum Herstellen eines derartigen Kunststoffbehältnisses angegeben.

Die dahingehenden Aufgaben lösen eine Vorrichtung zum Herstellen von Kunststoffbehältnissen mittels eines Form-, Füll- und Schließverfahrens mit den Merkmalen des Patentanspruchs 1 und ein Verfahren zum Herstellen eines entsprechenden Behältnisses mit den Merkmalen des Patentanspruchs 9, jeweils in ihrer Gesamtheit.

Die erfindungsgemäße Vorrichtung zum Herstellen von Kunststoffbehältnissen mittels eines Form-, Füll- und Schließverfahrens ist dadurch gekennzeichnet, dass zumindest beim Schließen der Kopfform bei geöffneter Hauptform eine Greifeinrichtung in die Hauptform gegenüberliegend zur Extrusionseinheit eingeführt, zumindest einen Teil des im vorhergehenden Fertigungsschrittes hergestellten Erzeugnisses in wieder lösbarer Weise erfassbar ist.

Es ist ferner vorgesehen, dass die Extrusionseinheit mittels einer Verfahreinrichtung gegenüber der in jeder Stellung der Formwerkzeuge ortsfest angeordneten Formeinrichtung zusammen mit jedem extrudierten Kunststoffschlauch gegenläufig bewegbar ist.

Durch die anspruchsgemäßen Merkmale kann bei kontinuierlicher Extrusion des Kunststoffschlauches mittels der Extrusionseinheit die Formgebung mittels des Formwerkzeuges erfindungsgemäß stationär erfolgen. Die stationäre Anordnung des Formwerkzeuges hat - im Vergleich zu der aus dem Stand der Technik bekannten Vorrichtung - den Vorteil, dass dieses erfindungsgemäß nicht in Extrusionsrichtung des Kunststoffschlauches kinematisch aufwändig hin- und her zu verfahren ist. Dadurch entfällt nicht nur das Bewegen des Formwerkzeuges, das bei Vorsehen von mehreren Kavitäten zur Herstellung jeweils eines Behältererzeugnisses ein hohes Gewicht aufweisen kann, sondern es ist auch eine für die Herstellung des Behältererzeugnisses exakte Ausrichtung der Formhälften des insoweit stationär angeordneten Formwerkzeuges zueinander erleichtert. Zusätzlich sind aufgrund des erfindungsgemäß stationär angeordneten Formwerkzeuges, dessen Anschlüsse, beispielsweise in Form einer Energie-, einer Kühlmedien- und/oder Druckluftversorgung, nicht bei Verfahrbewegungen des Formwerkzeuges in Extrusionsrichtung mitzubewegen. Dadurch ist die Energieaufnahme der Vorrichtung reduziert, wodurch die Vorrichtung in effizienter Weise betreibbar ist. Darüber hinaus kann auf die, sich im Wesentlichen auf der sterilen Abfüll- bzw. Produktionsseite befindlichen, Linear-, Leitungs- sowie Kabelführungen verzichtet werden, was eine wesentlich bessere technische Ausführung unter Hygienic Design konformen Bedingungen ermöglicht.

Gegenstand der Erfindung ist auch ein Verfahren zum Herstellen von Kunststoffbehältnissen mit einer solchen Vorrichtung mit zumindest den folgenden Verfahrensschritten: Kontinuierliche Extrusion mindestens eines vertikal ausgerichteten Kunststoffschlauches mittels einer vertikal auf- und ab verfahrbaren Extrusionseinheit in Richtung jeweils eines Aufnahmeraumes eines stationär angeordneten Formwerkzeuges; dabei i. Verfahren der Extrusionseinheit in Richtung des geöffneten Formwerkzeuges über eine Strecke, die im Wesentlichen der Gesamthöhe eines fertiggestellten Kunststoffbehältnisses entspricht, zum Verbringen eines Teils des jeweiligen kontinuierlich extrudierten Schlauches in eine Formposition in dem jeweiligen Aufnahmeraum des Formwerkzeuges; ii. Formgebung des jeweiligen Teils des kontinuierlich extrudierten Schlauches und Verschließen unter Ausbildung des jeweiligen Kunststoffbehältnisses durch Betätigen des Formwerkzeuges sowie gleichzeitiges Verfahren der abgesenkten Extrusionseinheit in entgegengesetzter Richtung mit Vergrößerung des axialen Abstands zu dem Formwerkzeug; wodurch bei zumindest zweifachem Durchlaufen der Verfahrensschritte i. und ii. kontinuierlich mindestens eine Kunststoffbehältnis-Kette hergestellt wird; und Trennen jedes Kunststoffbehältnisses von seinem in der jeweiligen Kunststoffbehältnis-Kette nachfolgenden weiteren Kunststoffbehältn is.

Bei dem erfindungsgemäßen Herstellungsverfahren erfolgt die Extrusion des Kunststoffschlauches kontinuierlich und permanent. Gegenüber einem diskontinuierlichen Herstellungsverfahren, bei dem mittels eines Heißmessers unter Bildung einer Schlauchöffnung vom Gesamtschlauch Schlauchteile abgetrennt und zu einer Fülleinrichtung transportiert werden, hat das kontinuierliche Herstellungsverfahren den Vorteil, dass der kontinuierlich extrudierte Kunststoffschlauch in der Art einer hermetischen Trennwand während des Füllvorganges und des Verschließens des Behältnisses eine steril verschlossene Umgebung für das Füllgut im Schlauchinneren sicherstellt, was insoweit gesteigerten Sterilisationsanforderungen Rechnung trägt.

Mittels der erfindungsgemäßen Vorrichtung bzw. mittels des erfindungsgemäßen Verfahrens ist die Prozessgeschwindigkeit (Zykluszeit) steigerbar, wodurch eine höhere Ausstoßrate erzielbar ist. Im Gegensatz dazu weist die aus dem Stand der Technik bekannte Vorrichtung aufgrund von komplexen Bewegungsabläufen lange Prozesszeiten auf, die sich in einer geringeren Ausstoßrate widerspiegeln können. Auch sind die hohen Prozesszeiten langen "Totzeiten" durch zusätzliche Bewegungsabläufe geschuldet, in denen jedoch keine prozessrelevanten Aktionen erfolgen.

Zudem ist mittels der erfindungsgemäßen Vorrichtung bzw. des erfindungsgemäßen Verfahrens der prozessbedingte Abfallanteil reduziert, wodurch die Umweltbilanz und Ressourcenverwertung der Produktionslinie verbessert ist. Im Gegensatz dazu weisen die aus dem Stand der Technik bekannten Vorrichtungen teilweise einen unverhältnismäßig hohen Abfallanteil auf, insbesondere bei kleinvolumigen Behältnissen kann der Abfallanteil pro Arbeitszyklus bis zu 60% betragen. Bei den aus dem Stand der Technik bekannten Vorrichtungen ist aufgrund des verwendeten Verfahrens und der Beschränkungen bedingt durch den mechanischen Aufbau der Vorrichtung eine Verringerung der Formwerkzeughöhen nicht möglich und somit der prozessbezogene Abfall systembedingt nicht reduzierbar.

Zusätzlich lässt sich der bauliche und steuerungstechnische Aufwand der erfindungsgemäßen Vorrichtung insgesamt reduzieren, wodurch kürzere Durchlaufzeiten bei der Planung, der Fertigung und der Inbetriebnahme von Neuprojekten mit solchen Maschinen möglich sind. Im Gegensatz dazu setzen die aus dem Stand der Technik bekannten Vorrichtungen einen enormen baulichen und steuerungstechnischen Aufwand voraus. Allein die zentrale Prozess- und Schließeinheit erfordert eine Vielzahl von aufwändigen Fertigungsteilen und Einzelkomponenten, die in ihrer Einzelfunktion synchron zueinander erst abgestimmt werden müssen.

Ferner kann durch die Verringerung der Anlagenkomplexität der erfindungsgemäßen Vorrichtung und eine damit einhergehend bessere Prozessstabilität eine Verbesserung der sogenannten Run-Time-Efficiency (RTE) erzielt werden. Aufgrund des komplexen Prozessablaufs der aus dem Stand der Technik bekannten Vorrichtungen ist eine erhöhte Störanfälligkeit von Maschinenfunktionen oder der Ausfall von Einzelkomponenten gegeben, was sich nachteilig auf die Laufzeitbeständigkeit der Anlage unter Produktionsbedingungen (RTE) auswirken kann.

Des Weiteren lässt sich die erfindungsgemäße Vorrichtung aufgrund des geringen Platzbedarfs und der verringerten Gesamthöhe wesentlich einfacher in Bestandslinien oder in Umgebungen mit baulichen Einschränkungen integrieren. Der Raumbedarf der aus dem Stand der Technik bekannten Vorrichtungen ist aufgrund ihres komplexen Aufbaus hoch. Die Anlagen nach dem Stand der Technik lassen sich somit wesentlich schwerer in Bestandslinien integrieren, weil die entsprechenden Umbaumaßnahmen von im Reinraum befindlichen Nachfolgeeinheiten (Down-Stream) mit hohen Zusatzkosten verbunden und oftmals aus bau- bzw. raumtechnischen Gründen erst gar nicht realisierbar sind.

Darüber hinaus ist mittels der erfindungsgemäßen Vorrichtung ein kontinuierlicher Extrusionsprozess mit ein- und mehrlagigen Endlosschläuchen durchführbar, ohne Verwendung eines Heißmessers, und der Verfahrweg der Fülldorne, insbesondere bei Kalibriervorgängen (LUER Kalibrierung), ist reduziert, wodurch ein prozessbedingtes Verschleißen von Dornrohroberflächen und die damit einhergehende intrinsische Partikelbildung reduziert ist, die das Füllgut verunreinigen kann.

Weitere Vorteile der erfindungsgemäßen Lösung sind Gegenstand der Unteransprüche.

Im Folgenden wird eine erfindungsgemäße Vorrichtung anhand der Zeichnung näher erläutert. Dabei zeigen in prinzipieller und nicht maßgeblicher Darstellung die
- Fig. 1: in einer perspektivischen Schrägansicht die erfindungsgemäße Vorrichtung zum Herstellen von Kunststoffbehältnissen;
- Fig. 2: in einer perspektivischen Schrägansicht und gegenüber Fig. 1 vergrößert wesentliche Komponenten der Vorrichtung aus Fig. 1;
- Fig. 3: in einer perspektivischen Frontalansicht einen Extrusionskopf, eine Formeinrichtung und eine Greifeinrichtung der Vorrichtung aus Fig. 2, wobei die geschlossene Greifeinrichtung zwischen der geöffneten Formeinrichtung angeordnet ist und zumindest ein Behältnis einer Schlauch-Behältnis-Kette klemmend hält;
- Fig. 4: in einer perspektivischen Frontalansicht die Vorrichtung aus Fig. 3, wobei die geschlossene Greifeinrichtung unterhalb der geöffneten Formeinrichtung angeordnet ist;
- Fig. 5: in einer perspektivischen Frontalansicht die Vorrichtung aus Fig. 3, wobei die unterhalb der Formeinrichtung angeordnete und geöffnete Greifeinrichtung bei geöffneter Kopfform und geschlossener Hauptform der Formeinrichtung das jeweilige Behältnis freigibt;
- Fig. 6: in einer perspektivischen Frontalansicht die Vorrichtung aus Fig. 3, wobei die unterhalb der Formeinrichtung angeordnete und geöffnete Greifeinrichtung bei geschlossener Formeinrichtung das jeweilige Behältnis freigibt; und
- Fig. 7: in einer perspektivischen Frontalansicht die Vorrichtung aus Fig. 3, wobei die geschlossene Greifeinrichtung bei geschlossener Kopfform zwischen der geöffneten Hauptform angeordnet, das jeweilige Behältnis klemmend hält.

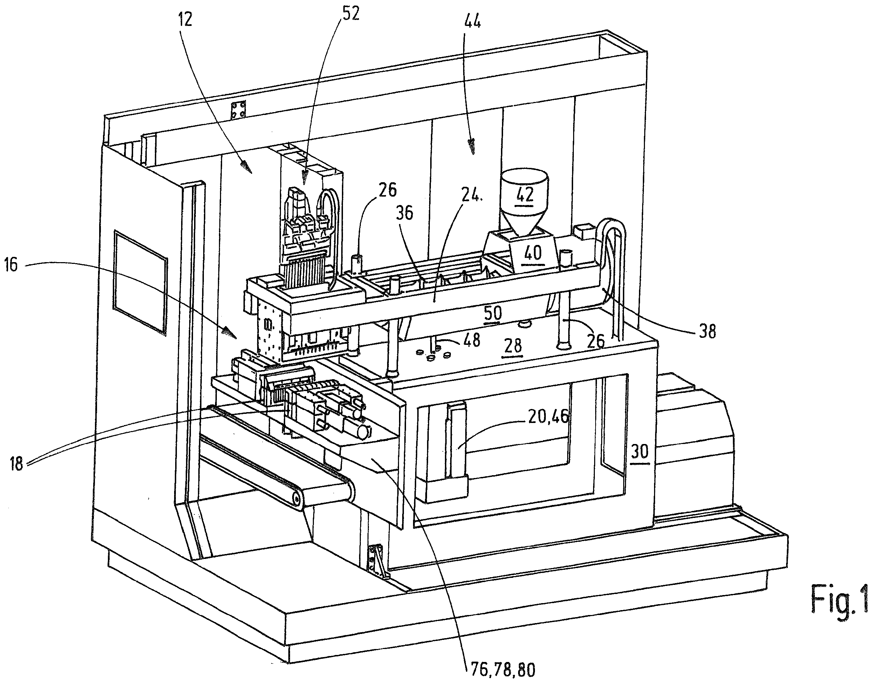

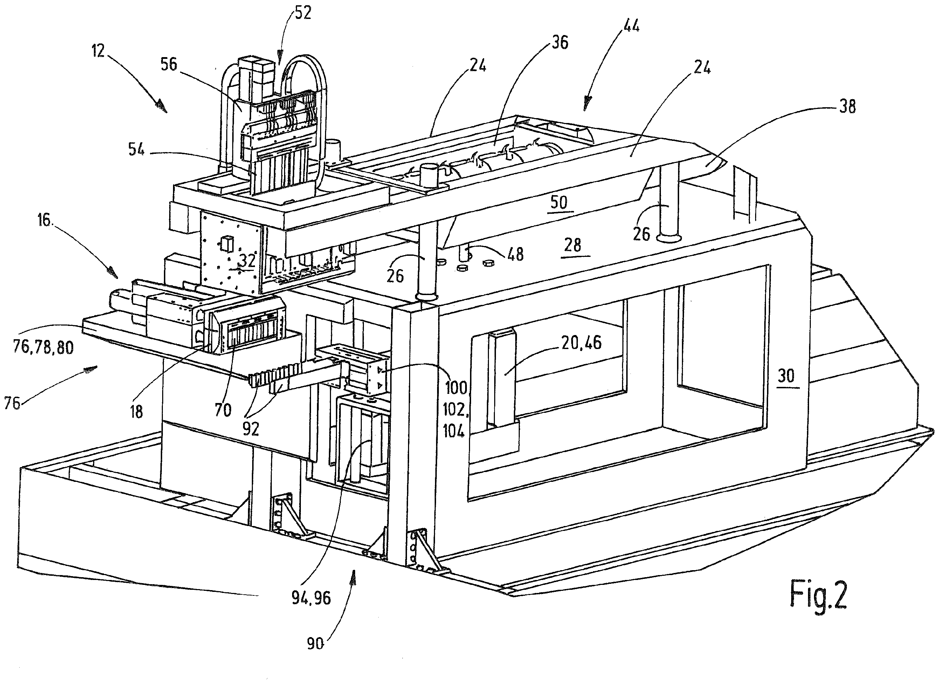

Fig. 1 und 2 zeigen eine erfindungsgemäße Vorrichtung zum Herstellen von Kunststoffbehältnissen 10 mittels eines Form-, Füll- und Schließverfahrens, fachsprachlich auch als bottlepack^{®}-Verfahren bezeichnet. Die Vorrichtung weist eine verfahrbare Extrusionseinheit 12 zum Extrudieren mindestens eines Kunststoffschlauches 14 und eine stationäre Formeinrichtung 16 mit einzelnen Formwerkzeugen 18 auf, die zwischen einer geöffneten Aufnahmestellung und einer formgebenden Schließstellung zueinander bewegbar sind. Die Extrusionseinheit 12 ist zusammen mit jedem extrudierten Kunststoffschlauch 14 mittels einer ersten Verfahreinrichtung 20 gegenüber der in jeder Verfahrstellung der Formwerkzeuge 18 ortsfest angeordneten Formeinrichtung 16 gegenläufig bewegbar, wodurch der jeweilige Kunststoffschlauch 14 in jeweils einen Aufnahmeraum 22 der in der Aufnahmestellung angeordneten Formwerkzeuge 18 einbringbar ist.

Die erste Verfahreinrichtung 20 dient zum vertikalen Verfahren der Extrusionseinheit 12 zwischen einer oberen Endstellung und einer unteren Endstellung in zueinander gegenläufigen Richtungen. Die Extrusionseinheit 12 ist mittels der ersten Verfahreinrichtung 20 derart linear verfahrbar, dass durch Anheben der Extrusionseinheit 12 ausgehend von der unteren Endstellung in Richtung der oberen Endstellung der jeweilige Kunststoffschlauch 14 bei geschlossener Formeinrichtung 16 kontinuierlich und auf Zug gehalten extrudierbar ist und durch Absenken der Extrusionseinheit 12 ausgehend von der oberen Endstellung in Richtung der unteren Endstellung ein Teil des derart extrudierten jeweiligen Kunststoffschlauches 14 von einer Extrusionsposition in eine Formgebungsposition zwischen die geöffneten Formwerkzeuge 18 der Formeinrichtung 16 bringbar ist.

Die Extrusionseinheit 12 weist zwei beabstandet voneinander und parallel zueinander verlaufende Längsträger 24 auf, die senkrecht zur Verfahrrichtung der Extrusionseinheit 12 und senkrecht zur Verfahrrichtung der Formwerkzeuge 18 ausgerichtet sind. Jeder Längsträger 24 ist entlang zweier vertikal ausgerichteter Führungssäulen 26 geführt, die voneinander beabstandet auf einer geschlossenen Kopfplatte 28 eines quaderförmigen Rahmens 30 festgelegt sind und den jeweiligen Längsträger 24 durchgreifen. Zwischen den der Formeinrichtung 16 zugewandten Endbereichen der Längsträger 24 ist ein Extrusionskopf 32 der Extrusionseinheit 12 festgelegt, der zumindest eine ringförmige Extrusionsdüse 34 aufweist, jeweils zur Abgabe des plastifizierten Kunststoffs in Schlauchform. In Richtung des der Formeinrichtung 16 abgewandten Endes der Längsträger 24 schließt sich an den Extrusionskopf 32 eine zwischen den Längsträgern 24 festgelegte Extrudierschneckeneinheit 36 an zum Aufschmelzen von Kunststoffgranulat in plastifizierten Kunststoff und zur Versorgung des Extrusionskopfes 32 mit dem dahingehend plastifizierten Kunststoffmaterial. Die Schneckeneinheit 36 ist mittels eines üblichen Antriebes 38 antreibbar, der teils zwischen den der Formeinrichtung 16 abgewandten Endbereichen der Längsträger 24 angeordnet ist und teils in Richtung von der Formeinrichtung 16 weg über die Längsträger 24 hervorragt. In dem dem Antrieb 38 zugewandten Endbereich der Schneckeneinheit 36 erstreckt sich entgegen der Extrusionsrichtung des Schlauches 14 ein von einem abgewinkelten Halteteil 40 getragener Sammeltrichter 42 von der Schneckeneinheit 36 weg, der zum Zuführen von Kunststoffgranulat in die Schneckeneinheit 36 vorgesehen ist. Die Schneckeneinheit 36 mit ihrem Antrieb 38 und der Sammeltrichter 42 sind insoweit Teil einer Plastifiziereinheit 44 der Extrusionseinheit 12.

In dem quaderförmigen Rahmen 30 ist ein erster Antrieb 46 der ersten Verfahreinrichtung 20 angeordnet, der an der Kopfplatte 28 des Rahmens 30 festgelegt ist. Eine Aktuatorstange 48 des ersten Antriebs 46 durchgreift die Kopfplatte 28 und wirkt endseitig auf eine Trägeranordnung, insbesondere eine Wanne 50, der Schneckeneinheit 36. Die Extrusionseinheit 12 lässt sich durch Ein- und Ausfahren der Aktuatorstange 48 eines Servomotors als dem ersten Antrieb 46 wiederholt von einer oberen in eine untere Endstellung, in Blickrichtung auf die Fig. 1 und 2 gesehen, verfahren.

Der Extrusionskopf 32 ist mit einer Fülleinrichtung 52 gekoppelt, die mindestens einen Fülldorn 54 aufweist, der sich in Vertikalrichtung zumindest teilweise durch den Extrusionskopf 32 erstreckt. Ein jeweiliger Fülldorn 54 dient zur Befüllung des jeweiligen mittels einer Hauptform 60 geformten Behälterkörpers mit einem abzufüllenden Fluid. Jeder Fülldorn 54 ist mittels einer zusätzlichen Verfahreinrichtung 56 gegenüber dem Extrusionskopf 32 zwischen einer oberen Endstellung und einer unteren End- bzw. Abgabestellung verfahrbar, in der sich der jeweilige Fülldorn 54 von der jeweiligen Extrusionsdüse 34 umfasst in das Innere des jeweiligen Schlauches 14 von dem Extrusionskopf 32 nach unten wegerstreckt. Zusätzliche Luftführungen zum Einbringen von Stützluft zwischen dem jeweiligen Fülldorn 54 und dem ihn umgebenden Kunststoffschlauch 14 sind der Einfachheit halber nicht dargestellt. Über den Fülldorn 54 kann bedarfsweise zur Formgebung des Behältnisses 10 im Formwerkzeug 18 auch Blasluft zugeführt werden, bevor über den Fülldorn 54 das Fluid in das Behältnis eingebracht wird. Über spezielle Luftdüsen, kann auch unabhängig vom Fülldorn 54, beispielsweise konzentrisch zu diesem Blas- oder Formluft zugeführt werden. Im Übrigen lässt sich die Formgebung des Behältnisses 10 durch Anlegen eines Vakuums an die Formhälften 18, in die das Behältererzeugnis 10 zunächst als Schlauch 14 eingebracht wird, ganz oder teilweise erreichen.

Zum Verfahren der Formwerkzeuge 18 der Formeinrichtung 16 zueinander und quer zur Verfahrrichtung der Extrusionseinheit 12, nämlich in Horizontalrichtung, ist eine zweite Verfahreinrichtung 58 vorgesehen, mittels der die Formwerkzeuge 18 zwischen der geöffneten Aufnahmestellung und der formgebenden Schließstellung in gegenläufige Richtungen zueinander bewegbar sind.

Die insgesamt vier Formwerkzeuge 18 der Formeinrichtung 16 sind in Gruppen unterteilt. Zwei Formwerkzeuge 18 einer Hauptform 60 bilden die erste Gruppe und dienen der Formgebung eines Behältniskörpers eines jeweiligen Kunststoffbehältnisses 10. Zwei Formwerkzeuge 18 einer Kopfform 64 bilden die zweite Gruppe und dienen der Formgebung eines Kopfteiles dieses Kunststoffbehältnisses 10. In jeder ihrer Verfahrstellungen liegen die beiden Formwerkzeuge 18 jeder Gruppe 60, 64 an einer fiktiven Ebene 68 gespiegelt einander gegenüber, die zur Verfahrrichtung der Formwerkzeuge 18 senkrecht verläuft und in der die Längsachse jedes Fülldorns 54 liegt. In Extrusionsrichtung des Kunststoffschlauches 14 gesehen, ist zunächst die Gruppe der Kopfform 64 und sich daran abstandsfrei anschließend die Gruppe der Hauptform 60 vorgesehen. Die einander zugewandten Flächen der beiden Formwerkzeuge 18 jeder Gruppe 60, 64 sind als Formflächen 70 ausgebildet. Das jeweilige Formwerkzeug 18 der Kopfform 64 weist eine schräg verlaufende Fläche 72 auf, die sich ausgehend von der Formfläche 70 in Richtung des Extrusionskopfes 32 und von dem Schlauch 14 weg erstreckt. Die beiden schrägen Flächen 72 der Kopf-Formwerkzeuge 18, 64 bilden bei geschlossener Kopfform 64 eine V-förmige Ausnehmung aus Dergestalt lässt sich eine unmittelbare Prozessabfolge von herzustellenden Längsreihen von Behältnissen 10 in der Art einer fortlaufenden vertikalen Behälterkette 74 erzeugen, was mit geringem Materialeintrag erfolgt, sodass unnötiger Abfall zwischen den Behälterlängsreihen in der Kette 74 vermieden ist.

Zum Aufnehmen der Formeinrichtung 16 ist eine Trägereinrichtung 76 vorgesehen, die eine horizontal ausgerichtete Trägerplatte 78 aufweist, auf der die Formeinrichtung 16 angeordnet ist. Die Trägerplatte 78 weist zwei Trägerplattenteile 80 auf, die symmetrisch zu der Ebene 68 voneinander beabstandet angeordnet sind. Im Mittenbereich jedes Trägerplattenteiles 80 sind übereinander gestapelt zwei quaderförmige Führungsteile als Führungsblöcke 82 vorgesehen, die in Richtung der Verfahrrichtung der Formwerkzeuge 18 ausgerichtet sind. Jeder Führungsblock 82 dient zur Führung von jeweils zwei Führungsstangen 84 zur Führung eines jeweiligen Formwerkzeuges 18, die beide an ihrem freien Ende mit jeweils ein und demselben Formträger 88 gekoppelt sind, der das jeweilige Formwerkzeug 18 trägt. Zudem dient jeder Führungsblock 82 zur Führung zweier Aktuatorstangen, die sich zwischen den Führungsstangen 84 in Richtung der Verfahrrichtung der Formwerkzeuge 18 durch den jeweiligen Führungsblock 82 hindurch erstrecken. Die jeweilige Aktuatorstange ist mittels jeweils eines zweiten linearen Antriebes 86 der zweiten Verfahreinrichtung 58 antreibbar. Der jeweilige zweite Antrieb 86 ist elektromechanisch wiederum in der Art eines Servomotors ausgebildet und auf der dem jeweiligen Formwerkzeug 18 abgewandten Stirnseite des jeweiligen Führungsblocks 82 festgelegt. An dem jeweiligen freien Ende der Aktuatorstange ist der jeweilige Formträger 88 befestigt. Durch ein synchrones Ein- und Ausfahren der Aktuatorstangen der zweiten Antriebe 86 für die jeweiligen Formbacken 18 der Kopfform 64 ist diese von ihrer Schließ- bzw. Aufnahmestellung in ihre Aufnahme- bzw. Schließstellung bringbar. Unabhängig von den Verfahrbewegungen der Kopfform 64 ist die Hauptform 60 mit ihren benachbart gegenüberliegenden Formbacken 18 durch ein synchrones Ein- und Ausfahren der Aktuatorstangen der zweiten Antriebe 86 von ihrer Schließ- bzw. Aufnahmestellung in ihre Aufnahme- bzw. Schließstellung bringbar.

Ferner ist eine Greifeinrichtung 90 mit Klemmleisten 92 vorgesehen, die sich jeweils in parallelen Richtungen zu der Formgebungsebene 68 erstrecken und in jeder ihrer Verfahrstellungen an der Ebene 68 gespiegelt einander gegenüberliegend angeordnet sind. Mittels einer dritten Verfahreinrichtung 94 sind die Klemmleisten 92 in Verfahrrichtung der ersten Verfahreinrichtung 20, also vertikal, zwischen einer oberen Endstellung, in der die Klemmleisten 92 zwischen der geöffneten Hauptform 60 angeordnet sind, und einer unteren Endstellung verfahrbar, in der die Klemmleisten 92 auf der dem Extrusionskopf 32 abgewandten Seite der Formeinrichtung 16 unterhalb derselben angeordnet sind. Im Mittenbereich ihrer dahingehenden Verfahrstrecke sind die Klemmleisten 92 zwischen den beiden Trägerplattenteilen 80 angeordnet. Der dritte Antrieb 96 der dritten Verfahreinrichtung 94 ist in dem Rahmen 30 angeordnet und weist eine vertikale Aktuatorstange auf, die auf einen Basiskörper 100 der Greifeinrichtung 90 einwirkt. An dem Basiskörper 100 sind die Klemmleisten 92 stehend festgelegt. Durch Aus- bzw. Einfahren der Aktuatorstange der dritten Verfahreinrichtung 94 ist der Basiskörper 100 bzw. sind die Klemmleisten 92 von einer unteren bzw. oberen Endstellung in eine obere bzw. untere Endstellung bringbar. Mittels einer vierten Verfahreinrichtung 102 sind die Klemmleisten 92 zwischen einer mindestens ein fertig hergestelltes, befülltes Behältnis 10 aufnehmenden Klemmstellung und einer das jeweilige Behältnis 10 freigebenden Freigabestellung für eine Entnahme der Behälterkette 74 aus der Vorrichtung horizontal bewegbar. Ein Antrieb 104 dieser vierten Verfahreinrichtung 102 ist dem Basiskörper 100 der Greifeinrichtung 90 zugeordnet.

Der Begriff "obere und untere Endstellung" einer jeweiligen verfahrbaren Einrichtung ist dahingehend zu verstehen, dass bei funktionsgemäßer Anordnung der erfindungsgemäßen Vorrichtung diese Endstellung der von einer Aufstellfläche (Hallenboden) der Vorrichtung am entferntest angeordneten bzw. am nächsten liegenden Position entspricht.

Im Folgenden wird die Funktion der erfindungsgemäßen Vorrichtung anhand des erfindungsgemäßen Herstellverfahrens näher erläutert:
Mittels der Extrusionseinheit 12 wird zumindest ein vertikal ausgerichteter Kunststoffschlauch 14 in Richtung der stationär angeordneten Formeinrichtung 16 kontinuierlich extrudiert. Dabei ist "kontinuierlich" dahingehend zu verstehen, dass während des gesamten Herstellungsverfahrens die Abgaberate des Kunststoffschlauches 14 aus der Extrusionseinheit 12 im Wesentlichen ununterbrochen gleichbleibt. Es ist selbstverständlich, dass zu Wartungszwecken oder Formumrüstvorgängen sowie zu Reinigungszwecken etc. die kontinuierliche Herstellung unterbrochen ist.

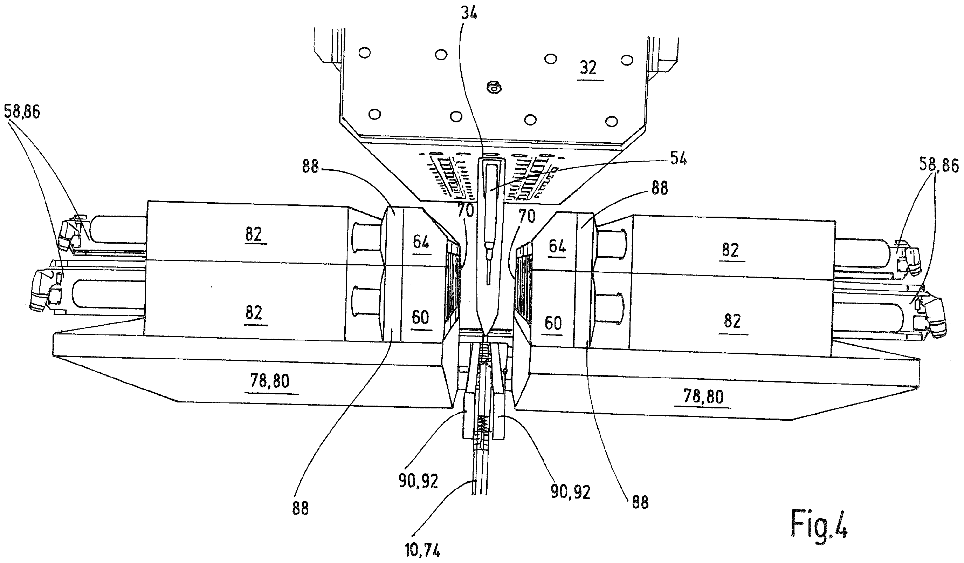

Zu Beginn eines Prozesszyklus wird die Extrusionseinheit 12 zusammen mit jedem kontinuierlich extrudierten Schlauch 14 mittels der ersten Verfahreinrichtung 20 ausgehend von ihrer oberen Endstellung in Richtung der geöffneten Formeinrichtung 16 über eine Strecke verfahren, die der Gesamthöhe eines fertiggestellten Kunststoffbehältnisses 10 abzüglich der während dieser Verfahrbewegung extrudierten Schlauchlänge entspricht. Dadurch wird ein über der Formeinrichtung 16 angeordneter Teil des jeweiligen Schlauches 14 in eine Formposition in den jeweiligen Aufnahmeraum 22 der Formeinrichtung 16 gebracht (Fig. 4). Zeitgleich zu der Verfahrbewegung der Extrusionseinheit 12 wird die in ihrer Klemmstellung angeordnete Greifeinrichtung 90, die zumindest ein sich an den Teil des jeweiligen Schlauches 14 anschließendes und fertiggestelltes Behältnis 10 klemmend greift, mittels der dritten Verfahreinrichtung 94 von ihrer oberen, zwischen den Formwerkzeugen 18 der Formeinrichtung 16 angeordneten, Endstellung in Richtung ihrer unteren, unterhalb der Formeinrichtung 16 angeordneten, Endstellung verfahren. Dabei wird mittels der Greifeinrichtung 90 bei geöffneter Formeinrichtung 16 jede Schlauch-Behältnis-Kette 74 gegenüber dem Extrusionskopf 32 auf Zug gehalten. Zeitgleich zu den Verfahrbewegungen der Extrusionseinheit 12 und der Greifeinrichtung 90 wird der mindestens eine Fülldorn 54 im jeweiligen Schlauchinneren von seiner oberen Endstellung in Richtung seiner unteren Endstellung ausgefahren.

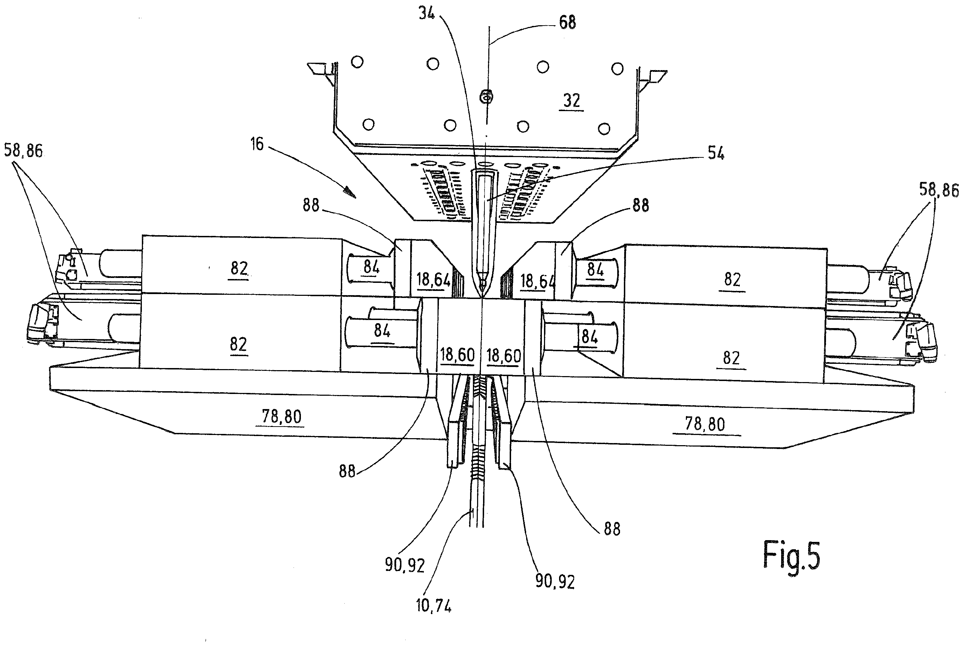

Darauffolgend wird mittels der zweiten Verfahreinrichtung 58 die Hauptform 60 von ihrer geöffneten Aufnahmestellung in ihre geschlossene Formstellung gebracht (Fig. 5) und aus dem zwischen den Haupt-Formwerkzeugen 18, 60 angeordneten jeweiligen Teil des kontinuierlich extrudierten Schlauches 14 der jeweilige Körper eines Kunststoffbehältnisses 10 oder mehrerer Kunststoffbehältnisse 10 geformt, die sich in Längsreihe horizontal in die Bildebene hinein erstrecken. Anschließend wird der jeweilige Behältniskörper mittels des in seine untere Endstellung verfahrenen jeweiligen Fülldorns 54 mit einer vorgebbaren Füllmenge befüllt, wobei jedem Behälter in der Längsreihe ein Fülldorn 54 zugeordnet ist. Hierfür erstreckt sich der jeweilige Fülldorn 54 zwischen den geöffneten Formwerkzeugen 18 der Kopfform 64 hindurch und das freie Ende dieses Fülldorns 54 greift zwischen die Formwerkzeuge 18 der Hauptform 60 in das Innere des jeweiligen Behältniskörpers ein. Direkt nach dem Zufahren oder Schließen der Hauptform 60 wird die Greifeinrichtung 90 mittels der vierten Verfahreinrichtung 102 von ihrer Klemmstellung in ihre das jeweilige Behältnis 10 freigebende Freigabestellung gebracht.

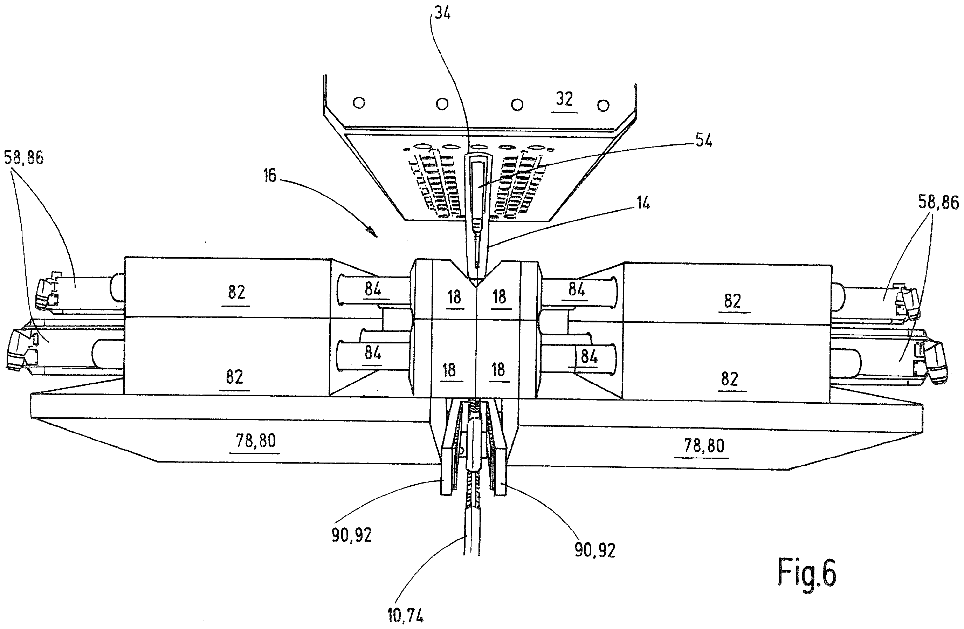

Dann wird der jeweilige Fülldorn 54 in Richtung seiner oberen Endstellung verfahren. Danach wird die Kopfform 64 mittels der zweiten Verfahreinrichtung 58 von ihrer geöffneten Aufnahmestellung in ihre geschlossene Formstellung gebracht (Fig. 6) und aus dem zwischen den Kopf-Formwerkzeugen 18, 64 angeordneten jeweiligen Teil des Schlauches 14 der jeweilige Kopf des Kunststoffbehältnisses 16 geformt. Dabei wird das jeweilige Behältnis 10 hermetisch verschlossen bzw. steril versiegelt, womit ein geformtes, befülltes und verschlossenes Behältnis 10 fertiggestellt ist.

Zur jeweiligen Formgebung wird im jeweiligen Kunststoffschlauch 14 durch die Zufuhr von steriler Luft ein Überdruck erzeugt, der den jeweiligen Kunststoffschlauch 14 in Richtung der Formflächen 70 der jeweiligen Formwerkzeuggruppe 60, 64 in seinem Formverlauf stabilisiert. Alternativ oder zusätzlich wird innerhalb der jeweiligen Formwerkzeuggruppe 60, 64 und außerhalb des Schlauches 14 ein Unterdruck erzeugt, der bewirkt, dass sich der Schlauch 14 an die Formflächen 70 der jeweiligen geschlossenen Formwerkzeuggruppe 60, 64 anlegt.

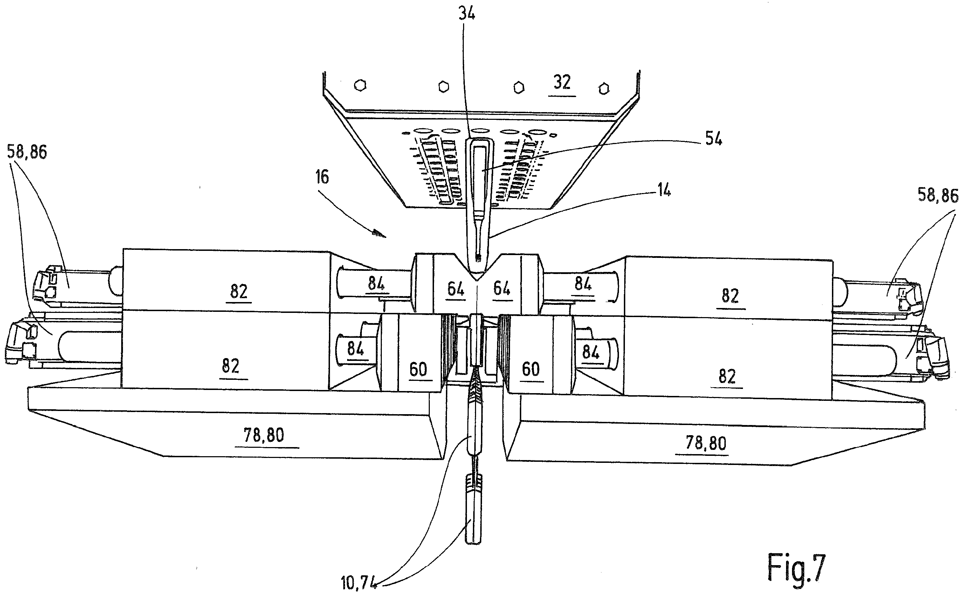

Anschließend werden die Haupt-Formwerkzeuge 18, 60 mittels der zweiten Verfahreinrichtung 58 geöffnet (Fig. 7), worauf folgend die Greifeinrichtung 90 mittels der dritten Verfahreinrichtung 94 entlang jeder Behälter-Kette 74 in ihre obere Endstellung zwischen die Haupt-Formwerkzeuge 18, 60 gebracht wird. Dabei legt die Greifeinrichtung 90 eine Strecke zurück, die im Wesentlichen der Gesamthöhe eines fertiggestellten Behältnisses 10 entspricht. In der oberen Endstellung wird die Greifeinrichtung 90 mittels der vierten Verfahreinrichtung 102 von ihrer Freigabestellung in ihre ein jeweiliges Behältnis 10 klemmend greifende Klemmstellung gebracht.

Da der Kunststoffschlauch 14 von der Extrusionseinheit 12 kontinuierlich extrudiert wird, verfährt die Extrusionseinheit 12 während zumindest eine der Formwerkzeuggruppen 60, 64 geschlossen ist zum auf Zug halten des Kunststoffschlauches 14 mit einer Geschwindigkeit entsprechend der Extrusionsgeschwindigkeit des Schlauches 14 zusammen mit diesem in Richtung ihrer oberen Endstellung. In Richtung ihrer unteren Endstellung verfährt die Extrusionseinheit 12 mit einer gegenüber der Extrusionsgeschwindigkeit des Schlauches 14 prozessbedingt höheren Geschwindigkeit.

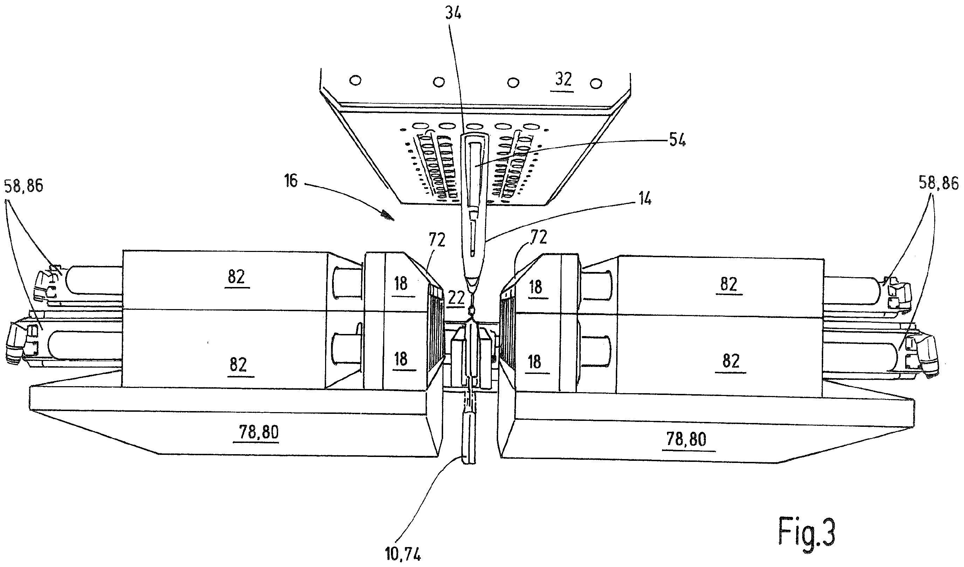

Danach werden die Kopf-Formwerkzeuge 18, 64 mittels der zweiten Verfahreinrichtung 58 geöffnet (Fig. 3), worauf folgend der Prozess zum Herstellen zumindest eines weiteren geformten, befüllten und verschlossenen Behältnisses 10 wiederholbar ist. Durch ein zumindest zweifaches Durchlaufen des Prozesses wird kontinuierlich mindestens eine Kunststoffbehältnis-Kette 74 hergestellt, deren zuletzt fertiggestelltes Behältnis 10 mit dem Kunststoffschlauch 14, vor einem späteren Abtrennen, verbunden ist.

Schließlich wird jedes Kunststoffbehältnis 10 von seinem in der jeweiligen Kunststoffbehältnis-Kette 74 nachfolgenden weiteren Kunststoffbehältnis 10 getrennt (nicht dargestellt), um zu einem verkaufsfähigen Endprodukt zu gelangen.

## Patentansprüche

1. Vorrichtung zum Herstellen von Kunststoffbehältnissen (10) mittels eines Form-, Füll- und Schließverfahrens, zumindest bestehend aus einer Formeinrichtung (16) mit einzelnen Formwerkzeugen (18), die wiederholt von einer geöffneten Aufnahmestellung in eine formgebende Schließstellung zueinander bewegbar sind, und aus einer Extrusionseinheit (12), mittels der mindestens ein extrudierter Kunststoffschlauch (14) in die geöffnete Aufnahmestellung der Formwerkzeuge (18) einbringbar ist, wobei die Extrusionseinheit (12) mittels einer Verfahreinrichtung (20) gegenüber der in jeder Stellung der Formwerkzeuge (18) ortsfest angeordneten Formeinrichtung (16) mit jedem extrudierten Kunststoffschlauch (14) gegenläufig bewegbar ist,
wobei die Formwerkzeuge (18) der Formeinrichtung (16) in gegenläufigen Richtungen horizontal mittels einer weiteren Verfahreinrichtung (58) zueinander bewegbar sind,
wobei die Extrusionseinheit (12) mittels der einen Verfahreinrichtung (20) quer dazu vertikal in gegenläufige Richtungen derart bewegbar ist, dass ein Teil des Kunststoffschlauches (14) von einer obersten Extrusionsposition mittels der abgesenkten Extrusionseinheit (12) in eine unterste Formgebungsposition bewegbar ist, und
wobei die Formwerkzeuge (18) der Formeinrichtung (16) paarweise in Gruppen (60, 64) unterteilt, als Hauptform (60) einmal der Formgebung eines Behälterkörpers des jeweiligen Behältnisses (10) und einmal als Kopfform (64) der Formgebung eines zugehörigen Kopfteiles dienen,
**dadurch gekennzeichnet,**
**dass** zumindest beim Schließen der Kopfform (64) bei geöffneter Hauptform (60) eine Greifeinrichtung (90) in die Hauptform (60) gegenüberliegend zur Extrusionseinheit (12) eingeführt, zumindest einen Teil des im vorhergehenden Fertigungsschrittes hergestellten Erzeugnisses (10) in wieder lösbarer Weise erfassbar ist.

2. Vorrichtung nach Anspruch 1, **dadurch gekennzeichnet, dass** die Extrusionseinheit (12) mittels der einen Verfahreinrichtung (20) quer dazu vertikal in gegenläufige Richtungen derart bewegbar ist, dass ein Teil des Kunststoffschlauches (14), bei gleichbleibender Abgabelänge, von einer obersten Extrusionsposition mittels der abgesenkten Extrusionseinheit (12) in eine unterste Formgebungsposition bewegbar ist.

3. Vorrichtung nach Anspruch 1 oder 2, **dadurch gekennzeichnet, dass** mit anschließendem Öffnen der Kopfform (64) die Greifeinrichtung (90) das jeweilige Behältnis (10) aus der Formeinrichtung (16) im Rahmen einer vertikal ausgerichteten Behälterkette (74) mittels einer dritten Verfahreinrichtung (94) entfernbar ist.

4. Vorrichtung nach einem der vorstehenden Ansprüche, **dadurch gekennzeichnet, dass** bei geschlossener Hauptform (60) in Extrusionsrichtung gesehen, unterhalb derselben die Greifeinrichtung (90) mittels einer vierten Verfahreinrichtung (102) gegenüber einer, die Behältnisse (10) aufnehmenden Klemmstellung in eine diese freigebende Freigabestellung und umgekehrt verfahrbar ist.

5. Vorrichtung nach einem der vorstehenden Ansprüche, **dadurch gekennzeichnet, dass** bei abgesenkter Extrusionseinheit (12) mindestens ein Fülldorn (54) die Befüllung des jeweiligen in der Hauptform (60) geformten Behälterkörpers vornimmt und dass das freie Ende des jeweiligen Fülldornes (54) hierfür zwischen die Formwerkzeuge (18) der Hauptform (60) in das Innere des Behälterkörpers eingreift.

6. Vorrichtung nach einem der vorstehenden Ansprüche, **dadurch gekennzeichnet, dass** für die Auf- und Absenkbewegung der Extrusionseinheit (12) diese zusammen mit einer in der Herstellabfolge vorangehenden Plastifiziereinheit (44) über eine Säulenführung (26) geführt, gegenüber der sonstigen Maschineneinheit der Vorrichtung aufgeständert ist und mittels der einen Verfahreinrichtung (20) linear auf- und absenkbar geführt ist.

7. Vorrichtung nach einem der vorstehenden Ansprüche, **dadurch gekennzeichnet, dass** mittels der einen Verfahreinrichtung (20) die Extrusionseinheit (12) in vertikaler Richtung eine langsame nach oben führende oder eine schnelle nach unten führende Bewegung ausführbar ist.

8. Verfahren zum Herstellen von Kunststoffbehältnissen (10) mit einer Vorrichtung nach einem der vorstehenden Ansprüche mit zumindest den folgenden Verfahrensschritten:
- Kontinuierliche Extrusion mindestens eines vertikal ausgerichteten Kunststoffschlauches (14) mittels einer vertikal auf und ab verfahrbaren Extrusionseinheit (12) in Richtung jeweils eines Aufnahmeraumes (22) eines stationär angeordneten Formwerkzeuges (18); dabei
i. Verfahren der Extrusionseinheit (12) in Richtung des geöffneten Formwerkzeuges (18) über eine Strecke, die im Wesentlichen der Gesamthöhe eines fertiggestellten Kunststoffbehältnisses (10) entspricht, zum Verbringen eines Teils des jeweiligen kontinuierlich extrudierten Schlauches (14) in eine Formposition in dem jeweiligen Aufnahmeraum (22) des Formwerkzeuges (18);
ii. Formgebung des jeweiligen Teils des kontinuierlich extrudierten Schlauches (14) und Verschließen unter Ausbildung des jeweiligen Kunststoffbehältnisses (10) durch Betätigen des Formwerkzeuges (18) sowie gleichzeitiges Verfahren der abgesenkten Extrusionseinheit (12) in entgegengesetzter Richtung mit Vergrößerung des axialen Abstands zu dem Formwerkzeug (18);
wodurch bei zumindest zweifachem Durchlaufen der Verfahrensschritte i. und ii. kontinuierlich mindestens eine Kunststoffbehältnis-Kette (74) hergestellt wird; und
- Trennen jedes Kunststoffbehältnisses (10) von seinem in der jeweiligen Kunststoffbehältnis-Kette (74) nachfolgenden weiteren Kunststoffbehältnis (10).

9. Verfahren nach Anspruch 8, **dadurch gekennzeichnet, dass** eine Greifeinrichtung (90) zum auf Zug halten jedes an der Extrusionseinheit (12) austretenden Kunststoffschlauches (14) und/oder jeder Kunststoffbehältnis-Kette (74) durch Greifen zumindest eines einen Teil des im vorhergehenden Fertigungsschrittes hergestellten Erzeugnisses (10) einer Kette (74) vorgesehen wird, die die jeweilige Kette (74) nach der Formgebung des Körpers des Kunststoffbehältnisses (10) zwischen geöffneten Hauptformbacken (60) des Formwerkzeuges (18) ergreift, wenn die Kopfbacken (64) zur Formgebung des Kopfes des Kunststoffbehältnisses (10) noch in einer geschlossenen Position gehalten werden.

## Claims

1. Apparatus for producing plastic containers (10) by means of a blow-moulding, filling and sealing process, consisting at least of a moulding device (16) with individual moulding tools (18), which can be moved repeatedly relative to each other from an open receiving position to a moulding closed position, and an extrusion unit (12), by means of which the at least one extruded plastic tube (14) can be introduced into the open receiving position of the moulding tools (18), wherein, by means of a displacement device (20), the extrusion unit (12) can be moved in conjunction with each extruded plastic tube (14) in the opposing direction with respect to the moulding device (16), which is arranged in a stationary manner in each position of the moulding tools (18),
wherein the moulding tools (18) of the moulding device (16) can be moved horizontally in opposing directions relative to each other by means of a further displacement device (58),
wherein, by means of the displacement device (20), the extrusion unit (12) can be moved transversely thereto vertically in opposing directions in such a manner that part of the plastic tube (14) can be moved from an uppermost extrusion position to a lowermost moulding position by means of the lowered extrusion unit (12) and
wherein the moulding tools (18) of the moulding device (16) are divided into groups (60, 64) in pairs, the main mould (60) being used on the one hand for moulding a container body of the respective container (10) and the head mould (64) being used on the other hand for moulding an associated head portion,
**characterised in that**
at least when the head mould (64) is closed with the main mould (60) open, a gripping device (90), which is inserted into the main mould (60) opposing the extrusion unit (12), can grasp at least a part of the product (10) manufactured in the proceeding production step in a releasable manner.

2. Apparatus according to claim 1, **characterised in that**, by means of the displacement device (20), the extrusion unit (12) can be moved transversely thereto vertically in opposing directions in such a manner that part of the plastic tube (14), the delivery length remaining constant, can be moved from an uppermost extrusion position to a lowermost moulding position by means of the lowered extrusion unit (12).

3. Apparatus according to claim 1 or 2, **characterised in that**, with subsequent opening of the head mould (64), the gripping device (90) can remove the respective container (10) from the moulding device (16) as part of a vertically oriented container chain (74) by means of a third displacement device (94).

4. Apparatus according to one of the preceding claims, **characterised in that** when the main mould (60) is closed, as viewed in the extrusion direction, below the main mould (60) the gripping device (90) can be moved by means of a fourth displacement device (102) from a clamping position, in which the containers (10) are held, to a release position, in which the containers (10) are released, and vice versa.

5. Apparatus according to one of the preceding claims, **characterised in that**, when the extrusion unit (12) is lowered, at least one filling mandrel (54) carries out filling of the respective container body moulded in the main mould (60) and **in that** the free end of the respective filling mandrel (54) engages for this purpose between the moulding tools (18) of the main mould (60) in the interior of the container body.

6. Apparatus according to one of the preceding claims, **characterised in that**, for the raising and lowering movement of the extrusion unit (12), the latter is guided together with a plasticising unit (44) upstream in the production sequence via a column guide (26), is elevated with respect to the other machine unit of the apparatus, and is guided by means of the one displacement device (20) so that it can be raised or lowered in a linear manner.

7. Apparatus according to one of the preceding claims, **characterised in that**, by means of the one displacement device (20), the extrusion unit (12) can perform a slow upward movement or a fast downward movement in the vertical direction.

8. Method for producing plastic containers (10) with an apparatus according to one of the preceding claims with at least the following method steps:
- continuous extrusion of at least one vertically oriented plastic tube (14) by means of an extrusion unit (12) which can be moved vertically up and down in the direction of a respective receiving chamber (22) of a moulding tool (18), which is arranged in a stationary manner; thereby
i. moving the extrusion unit (12) in the direction of the open moulding tool (18) over a distance which substantially corresponds to the overall height of a completed plastic container (10), to bring part of the respective continuously extruded tube (14) to a moulding position in the respective receiving chamber (22) of the moulding tool (18);
ii. moulding the respective part of the continuously extruded tube (14) and sealing it to form the respective plastic container (10) by actuating the moulding tool (18) and simultaneously moving the lowered extrusion unit (12) in the opposite direction while increasing the axial distance to the moulding tool (18); as a result of which at least one plastic container chain (74) is continuously produced by running through the method steps i. and ii. at least twice; and
- separating each plastic container (10) from is subsequent plastic container (10) in the respective plastic container chain (74).

9. Method according to Claim 8, **characterised in that** a gripping device (90) is provided for holding in tension each plastic tube (14) and/or each plastic container chain (74) emerging from the extrusion unit (12) by gripping at least a part of the product (10) of a chain (74) manufactured in the upstream production step, which gripping device grips the respective chain (74), after the body of the plastic container (10) has been moulded, between the open main mould jaws (60) of the moulding tool (18), when the head jaws (64) for moulding the head of the plastic container (10) are still held in a closed position.

## Revendications

1. Installation de fabrication de récipients (10) en matière plastique, au moyen d'un procédé de moulage, remplissage et fermeture, consistant au moins en un dispositif (16) de moulage ayant des outils (18) individuels de moulage, qui peuvent être déplacés les uns par rapport aux autres, de manière répétée, d'une position de réception ouverte à une position de fermeture donnant la forme, et d'une unité (12) d'extrusion, au moyen de laquelle au moins une gaine (14) extrudée de matière plastique peut être apportée à la position de réception ouverte des outils (18) de moulage, dans laquelle l'unité (12) d'extrusion peut, au moyen d'un dispositif (20) de déplacement, être déplacée en sens contraire, avec chaque gaine (14) extrudée de matière plastique, par rapport au dispositif (16) de moulage disposé à poste fixe dans chaque position des outils (18) de moulage,
dans laquelle les outils (18) de moulage du dispositif (16) de moulage peuvent être déplacés les uns par rapport aux autres horizontalement dans des sens contraires, au moyen d'un autre dispositif (58) de déplacement,
dans laquelle l'unité (12) d'extrusion peut, au moyen du un dispositif (20) de déplacement, être déplacée transversalement à celui-ci verticalement dans des sens contraires, de manière à ce qu'une partie de la gaine (14) en matière plastique puisse être déplacée d'une position d'extrémité la plus haute, au moyen de l'abaissement de l'unité (12) d'extrusion, à une position la plus basse donnant la forme, et
dans laquelle les outils (18) de moulage du dispositif (16) de moulage sont subdivisés paire par paire en des groupes (60, 64) sous la forme d'un moule (60) principal d'une part servant à donner la forme d'un corps du récipient (10) respectif et d'autre part sous la forme d'un moule (64) de tête servant à donner la forme d'une partie de tête lui appartenant,
**caractérisée**
**en ce qu'**au moins à la fermeture du moule (64) de tête alors que le moule (60) principal est ouvert, un dispositif (90) de préhension est introduit dans le moule (60) principal en face de l'unité (12) d'extrusion, au moins une partie du produit (10) fabriqué dans le stade de fabrication précédent pouvant être saisi à nouveau de manière amovible.

2. Installation suivant la revendication 1, **caractérisée en ce que** l'unité (12) d'extrusion peut, au moyen du un dispositif (20) de déplacement, être déplacée transversalement à celui-ci verticalement dans des sens contraires, de manière à ce qu'une partie de la gaine (14) en matière plastique, pour une longueur de distribution restant constante, puisse être déplacée d'une position d'extrusion la plus haute, au moyen de l'abaissement de l'unité (12) d'extrusion, à une position la plus basse donnant la forme.

3. Installation suivant la revendication 1 ou 2, **caractérisée en ce qu'**avec l'ouverture venant ensuite du moule (64) de tête, le dispositif (90) de préhension peut, au moyen d'un troisième dispositif (94) de déplacement, par rapport au récipient (10) respectif, être retiré du dispositif (16) de moulage, dans le cadre d'une chaîne (74) de récipients dirigée verticalement.

4. Installation suivant l'une des revendications précédentes, **caractérisée en ce que**, lorsque le moule (60) principal est fermé, considéré dans le sens de l'extrusion, en-dessous de celui-ci, le dispositif (90) de préhension peut, au moyen d'un quatrième dispositif (102) de déplacement, être déplacé par rapport à une position de serrage recevant les récipients (10) dans une position de libération les libérant et inversement.

5. Installation suivant l'une des revendications précédentes, **caractérisée en ce que**, lorsque l'unité (12) d'extrusion est abaissée, au moins un mandrin (54) de remplissage effectue le remplissage du corps de récipient respectif monté dans le moule (60) principal et **en ce que** l'extrémité libre du mandrin (54) de remplissage respectif pénètre à cet effet entre les outils (18) de moulage du moule (60) principal à l'intérieur du corps du récipient.

6. Installation suivant l'une des revendications précédentes, **caractérisée en ce que** pour le mouvement de montée et d'abaissement de l'unité (12) d'extrusion, celle-ci est guidée ensemble, par un guidage (26) en colonne, avec une unité (44) de plastification précédente dans la chaîne de fabrication, est mise debout par rapport à l'autre unité de machine de l'installation et est guidée, avec possibilité de monter et de s'abaisser linéairement, au moyen du un dispositif (20) de déplacement.

7. Installation suivant l'une des revendications précédentes, **caractérisée en ce que**, au moyen du un dispositif (20) de déplacement, l'unité (12) d'extrusion peut être réalisée en ayant dans la direction verticale un guidage lent vers le haut ou rapide vers le bas.

8. Procédé de fabrication de récipients (10) en matière plastique par une installation suivant l'une des revendications précédentes, comprenant au moins les stades de procédé suivants :
- extrusion en continu d'au moins une gaine (14) de matière plastique dirigée verticalement, au moyen d'une unité (12) d'extrusion pouvant monter et s'abaisser verticalement en direction respectivement d'un espace (22) de réception d'un outil (18) de moulage monté fixe ; à cet effet
i. déplacement de l'unité (12) d'extrusion en direction de l'outil (18) de moulage ouvert sur une course, qui correspond pour l'essentiel à la hauteur totale d'un récipient (10) en matière plastique fini de fabrication, pour mettre une partie de la gaine (14) respective extrudée en continu dans une position de moulage dans l'espace (22) de réception respectif de l'outil (18) de moulage ;
ii. façonnage de la partie respective de la gaine (14) extrudée en continu et fermeture avec constitution du récipient (10) respectif en matière plastique par actionnement de l'outil (18) de moulage ainsi que déplacement simultané de l'abaissement de l'unité (12) d'extrusion en sens contraire avec agrandissement de la distance axiale à l'outil (18) de moulage ;
grâce à quoi, lors d'au moins l'exécution deux fois des stades i. et ii. du procédé, on fabrique en continu au moins une chaîne (74) de récipients en matière plastique ; et
- séparation de chaque récipient en matière plastique de son autre récipient (10) en matière plastique suivant dans la chaîne (74) respective de récipient (10) en matière plastique.

9. Procédé suivant la revendication 8, **caractérisé en ce qu'**il est prévu un dispositif (90) de préhension pour, par préhension d'au moins un produit (10) d'une chaîne (74) fabriqué dans le stade de fabrication précédent, maintenir en traction chaque gaine (14) de matière plastique sortant à l'unité (12) d'extrusion et/ou chaque chaîne (74) de récipients en matière plastique, lequel dispositif saisit la chaîne (74) respective après le façonnage du corps du récipient (10) en matière plastique entre des mâchoires (60) ouvertes du moule principal de l'outil (18) de moulage, si les mâchoires (64) de tête sont maintenues encore dans une position fermée pour le façonnage de la tête du récipient (10) en matière plastique.
